Europäisches Patentamt

European Patent Office

Office européen des brevets

(11) Numéro de publication: **0 037 476**
**B1**

(12) **FASCICULE DE BREVET EUROPEEN**

(45) Date de publication du fascicule du brevet: **24.07.85**

(51) Int. Cl.⁴: **G 02 B 6/32**

(21) Numéro de dépôt: **81101869.6**

(22) Date de dépôt: **13.03.81**

(54) **Procédé de couplage d'au moins deux fibres optiques au moyen d'une lentille holographique et dispositif de mise en oeuvre de ce procédé.**

(30) Priorité: **03.04.80 CH 2677/80**

(43) Date de publication de la demande:
**14.10.81 Bulletin 81/41**

(45) Mention de la délivrance du brevet:
**24.07.85 Bulletin 85/30**

(84) Etats contractants désignés:
**AT BE CH DE FR GB IT LI LU NL SE**

(56) Documents cités:
**DE-A-2 600 371**
**FR-A-2 062 301**
**US-A-4 057 319**

**IEEE JOURNAL OF QUANTUM ELECTRONICS, vol. QE-11, no. 9, Septembre 1975, H. NISHIHARA et al. "Holocoupler: a novel coupler for optical circuits", pages 794 - 796**

(73) Titulaire: **CABLOPTIC S.A.**
**Rue François-Borel**
**CH-2016 Cortaillod (CH)**

(72) Inventeur: **Falco, Lucien**
**Vignoble 68**
**CH-2087 Cornaux (CH)**

(74) Mandataire: **Nithardt, Roland**
**CABINET ROLAND NITHARDT Rue Edouard Verdan 15**
**CH-1400 Yverdon (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne un procédé de couplage d'au moins deux fibres optiques au moyen d'une lentille holographique de couplage, dans lequel on enregistre un hologramme de phase et de volume pour constituer ladite lentille holographique de couplage.

Elle concerne également un dispositif pour la mise en oeuvre de ce procédé, comportant un support rigide agencé pour maintenir, dans des positions relatives déterminées, la lentille holographique de couplage et les extrémités des fibres à coupler.

Des procédés de couplage de ce type, ainsi que des dispositifs pour la mise en oeuvre de ces procédés, ont déjà été décrits, en particulier dans le brevet américain no 4'057'319 et dans le brevet suisse no 626729 de la déposante.

Dans le brevet américain, les extrémités des fibres sont montées respectivement sur deux parties complémentaires d'un support, ces parties pouvant être assemblées pour constituer ledit support et maintenir, dans une position relative déterminée, la lentille holographique de couplage et les extrémités des fibres à coupler.

Dans le second brevet suisse mentionné où le couplage fait appel à une technique dite "in situ", les deux extrémités des fibres à coupler sont noyées dans un bloc transparent, à l'intérieur duquel est formé un premier hologramme dit hologramme provisoire servant à l'enregistrement d'un deuxième hologramme dit hologramme définitif, utilisé comme hologramme de couplage des deux fibres optiques.

Dans les deux cas, les fibres, couplées et utilisées pour l'enregistrement de l'hologramme servant de lentille holographique de couplage, sont des fibres multimodes couramment utilisées dans les techniques de transmission de signaux par fibres optiques. Or, on a constaté que les coupleurs holographiques à fibres multimodes offrent une faible efficacité si les hologrammes sont enregistrés au moyen de ces fibres. Ceci est dû à une répartition non uniforme de la lumière dans les faisceaux issus des fibres, phénomène appelé "speckling", qui altère l'image d'interférence. L'efficacité maximale est réduite d'un facteur deux à trois selon le type de coupleur.

La présente invention est destinée à remédier à ces inconvénients en proposant un procédé de couplage de fibres optiques permettant de supprimer les effets négatifs dus au phénomène de speckling, et en accroissant sensiblement l'efficacité du coupleur.

Dans ce but, le procédé susmentionné est caractérisé en ce que l'on procède à l'enregistrement de l'hologramme de base et de volume au moyen de fibres optiques monomodes, et en ce que l'on remplace ensuite lesdites fibres monomodes par des fibres multimodes devant être couplées par la lentille holographique, des moyens étant prévus pour positionner avec précision les extrémités des fibres multimodes à l'emplacement préalablement occupé par des fibres monomodes.

Le dispositif pour la mise en oeuvre de ce procédé est de'crit dans le revendication 2.

Le procédé et le dispositif selon l'invention seront mieux compris en référence à la description d'un exemple de réalisation et du dessen annexé, dans lequel:

La figure 1 représente une vue schématique d'ensemble d'un coupleur holographique selon l'invention, et

La figure 2 représente une vue agrandie d'une partie du coupleur de la fig. 1, illustrant plus particulièrement les moyens permettant de positionner les extrémités des fibres multimodes, après le retrait des fibres monomodes utilisées pour l'enregistrement de l'hologramme.

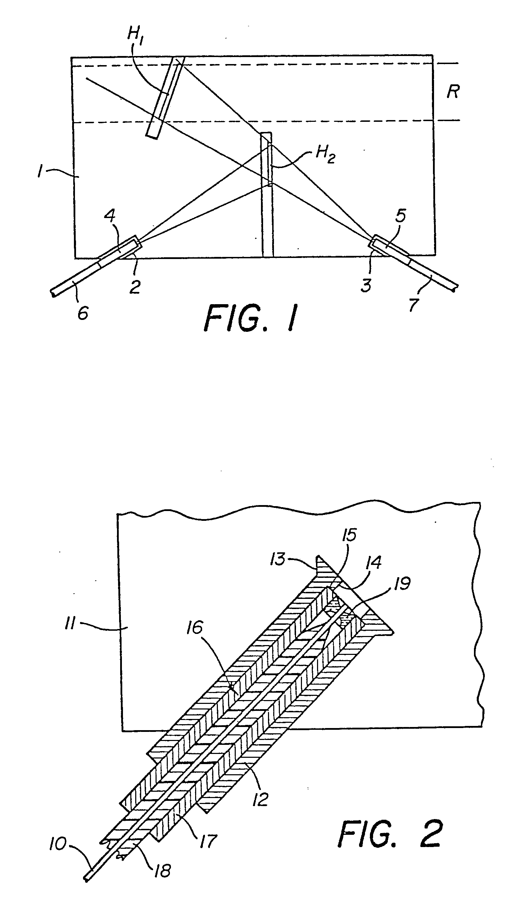

En référence à la fig. 1, le coupleur holographique représenté se présente de préférence sous la forme d'un bloc cylindrique 1 en matière synthétique transparente durcie, telle qu'une résine polymérisée. Deux alésages 2 et 3, de forme cylindrique, sont prévus pour loger les pièces d'extrémité ou férules 4 et 5, qui sont montées auf extrémités 6 et 7 de deux fibres optiques destinées à être couplées au moyen de ce coupleur. A l'intérieur de ce bloc, se trouve une première lentille holographique dite lentille provisoire $H_1$ et un seconde lentille holographique $H_2$ appelée lentille définitive qui sert au couplage des fibres optiques 6 et 7. Le brevet suisse cité dans l'introduction décrit de façon détaillée le mode d'enregistrement de l'hologramme $H_2$ au moyen de la lentille provisoire $H_1$.

Dans le procédé décrit, les fibres 6 et 7 utilisées pour l'enrigistrement des hologrammes $H_1$ et $H_2$ sont des fibres monomodes qui permettent d'éliminer le phénomène du speckling et d'obtenir une lentille de couplage de grande efficacité. Les fibres monomodes étant difficiles à fabriquer et de réalisation coûteuse, il n'est guère possible, ni rentable de les utiliser couramment et en grande quantité dans les techniques de transmission de signaux par fibres optiques. C'est pourquoi on ne les utilise que pendant la phase de constitution de la lentile de couplage, en prévoyant des logements précis dans le bloc 1 dans lesquels on peut introduire initialement les pièces d'extrèmité ou férules équipant les fibres monomodes, puis après le retrait de ces dernières, positionner avec precision et mettre en place définitivement par collage, les pièces d'extrémité équipant les fibres multimodes devant être couplées par la lentille holographique $H_2$.

La figure 1 représente, à titre d'exemple, une forme de réalisation particulièrement simple où ces logements sont constitués par des alésages 2 et 3 de forme sensiblement cylindrique. Le diamètre de ces alésages correspond au diamètre extérieur des pièces d'extrémité 4 et 5, et le fond de l'alésage comporte de préférence un épaulement annulaire contre lequel vient buter la pièce d'extrémité de la fibre, définissant ainsi avec précision sa position dans la direction de l'axe de cet alésage.

la figure 2 représente une forme de réalisation quelque peu élaborée des moyens destinés à positionner, de façon précise, les extrémités des fibres optiques à coupler. Pour chacune des fibres optiques 10 à coupler, une douille ou manchon 12 est incrustée dans le bloc transparent 11. La douille 12, de forme cylindrique creuse, comporte, à son extrémité, un élargissement périphérique 13 orienté vers l'extérieur, destiné à ancrer rigidement cette douille dans la masse du block transparent, et un rebord intérieur 14 définissant un épaulement annulaire 15 contre lequel vient buter la pièce d'extrémité 16, dans laquelle est montée l'extrémité de la fibre optique 10. La pièce d'extrémité 16 comporte un élément tubulaire 17, dont le diamètre intérieur correspond sensiblement au diamètre extérieur de la gaine 18 entourant la fibre 10, et un organe de centrage 19 par exemple une pierre d'horlogerie, monté à l'extrémité de couplage de l'élément tubulaire 17. Le diamètre extérieur de cet élément tubulaire 17 correspond sensiblement au diamètre intérieur de la douille 12, de sorte que lorsqu'on introduit le pièce d'extrémité de la fibre dans la douille, sa position radiale est définie avec précision. La position axiale est définie par l'épaulement 15, contre lequel vient buter la pièce d'extrémité 16, lorsqu'elle est repoussée à fond à l'intérieur de la douille 12.

Ce dispositif de positionnement assure l'interchangeabilité des fibres, et en particulier permet de remplacer les fibres monomodes utilisées pour l'enregistrement de la lentille holographique, par des fibres multimodes utilisées par la suite. Ces dernières sont de préférence montées de façon définitive, par exemple par collage à l'intérieur de la douille réceptrice.

**Revendications**

1. Procédé de couplage d'au moins deux fibres optiques multimodes (6, 7, 10) au moyen d'une lentille holographique de couplage (H₂), au cours duquel on enregistre un hologramme de phase et de volume pour constituer ladite lentille holographique de couplage, caractérisé en ce que l'on procède à l'enregistrement de l'hologramme de phase et de volume au moyen de fibres optiques monomodes, et en ce que l'on remplace ensuite lesdites fibres monomodes par des fibres multimodes devant être couplées par la lentille holographique, des moyens étant prévus pour positionner avec précision les extrémités des fibres multimodes à l'emplacement préalablement occupé par les fibres monomodes.

2. Dispositif pour la mise en oeuvre du procédé de la revendication 1, caractérisé en ce qu'il comporte un support rigide 1, 11 agencé pour maintenir, dans des positions relatives déterminées, la lentille holographique de couplage (H₂) et les extrémités des fibres à coupler, et en ce qu'il comporte des moyens pour postionner avec précision les extrémités des fibres multimodes à coupler, à l'emplacement initialement occupé par les fibres monomodes.

3. Dispositif selon la revendication 2, caractérisé en ce que l'hologramme de phase et de volume, constituant la lentille holographique, est moulé dans un bloc transparent, et en ce que lesdits moyens pour positionner les fibres comportent des alésages borgnes agencés pour pouvoir loger les extrémités des fibres à coupler.

4. Dispositif selon la revendication 3, caractérisé en ce que les extrémités des fibres sont montées à l'intérieur de pièces d'extrémité métalliques de forme cylindrique, et en ce que les alésages borgnes sont de forme cylindrique, leur diamètre intérieur étant sensiblement égal au diamètre extérieur des pièces d'extrémité des fibres.

5. Dispositif selon les revendications 2 et 3, caractérisé en ce que les alésages borgnes sont constitués par des douilles métalliques cylindriques creuses prises dans la masse dudit bloc transparent, le diamètre intérieur de ces douilles métalliques étant sensiblement égal au diamètre extérieur des pièces d'extrémité des fibres.

**Patentansprüche**

1. Verfahren zum Kuppeln von wenigstens zwei optischen Mehrfachfasern (6, 7, 10) mit Hilfe einer holographischen Kupplungslinse (H₂), in dessen Verlauf man ein Hologram der Phase und des Volumens aufzeichnet, um die besagte holographische Kupplungslinse zu bilden, dadurch gekennzeichnet, daß man die Aufzeichnung des Holograms der Phase und des Volumens mit Hilfe von optischen Einfachfasern vornimmt und daß man dann diese Einfachfasern durch Mehrfachfasern ersetzt, bevor sie durch die holographische Linse gekuppelt sind, wobei Mittel vorgesehen sind, um die äußersten Enden der Mehrfachfasern genau an die vorher von den Einfachfasern eingenommene Stelle zu bringen.

2. Vorrichtung zur Durchführung des Verfahrens nach Anspruch 1, dadurch gekennzeichnet, daß die einen starren, zum Zusammenhalten der holographischen Kupplungslinse und der äußersten Enden der zu kuppelnden Fasern in bestimmten Relativstellungen dienenden Stützkörper (1, 11) umfaßt und daß sie Mittel aufweist, um die äußersten Enden der zu kuppelnden Mehrfachfasern genau an die anfänglich von den Einfachfasern eingenommene Stelle zu bringen.

3. Vorrichtung nach Anspruch 2, dadurch gekennzeichnet, daß das die holographische Linse bildende Hologramm der Phase und des Volumens in einem durchsichtigen Block gegossen ist und daß die Mittel zum Positionieren der Fasern aus Sacklöchern bestehen, um die äußersten Enden der zu kuppelnden Fasern unterbringen zu können.

4. Vorrichtung nach Anspruch 3, dadurch gekennzeichnet, daß die äußersten Enden der Fasern im Innern metallischer Endstücke von zylindrischer Form gefaßt und die Sacklöcher zylindrisch geformt sind, wobei deren Innendurchmesser dem Außendurchmesser der Faserendstücke genau gleich ist.

5. Vorrichtung nach den Ansprüchen 2 und 3, dadurch gekennzeichnet, daß die Sacklöcher von zylindrischen, metallischen, tief in der Masse des durchsichtigen Blockes eingefügten Röhren gebildet sind, wobei der Innendurchmesser der metallischen Röhren genau gleich dem Außendurchmesser der Faserendstücke ist.

**Claims**

1. A method of coupling at least two optical multimodal (6, 7, 10), by a holographic coupling lens (H2), comprising the recording of a hologram of phase and volume to produce a holographic coupling lens, characterized in that the recording of the hologram of phase and volume is realized by means of monomodal optical fibers and that said monomodal fibers are replaced by multimodal fibers to be coupled at the holographic lens, and providing means for precisely positioning the ends of the multimodal fibers at the position previously occupied by the replaced monomodal fibers.

2. An apparatus according to the method as claimed in claim 1, characterized in that a rigid support (1, 11) is arranged to hold in given relative positions the holographic coupling lens (H2) and the ends of fibers to be coupled and said rigid support comprises means for precisely positioning the ends of multimodal fibers to be coupled at a position initially occupied by said monomodal fibers.

3. An apparatus according to claim 2, characterized in that the hologram of phase and volume constituting the holographic lens is molded into a transparent block and in that means for positioning the fibers comprises blind bores arranged in said block so that the ends of the fibers to be coupled can be lodged in them.

4. An apparatus according to claim 3, characterized in that fibers ends are mounted within metallic end pieces of cylindrical shape, said blind bores being of cylindrical shape and having an internal diameter substantially equal to the external diameter of the end parts of fibers to be coupled.

5. An apparatus according to claims 2 and 3, characterized in that said blind bores are formed by hollow cylindrical metallic sockets set in the mass of the transparent block, the internal diameter of said metallic sockets being substantially equal to the external diameter of the end parts of the fibers to be coupled.

FIG. 1

FIG. 2